Europäisches Patentamt

European Patent Office

Office européen des brevets

(19)

(11) Publication number: **0 041 374**

**A1**

(12)

# EUROPEAN PATENT APPLICATION

(21) Application number: **81302370.2**

(22) Date of filing: **29.05.81**

(51) Int. Cl.³: **H 02 H 3/347**

(30) Priority: **04.06.80 GB 8018369**

(43) Date of publication of application:
**09.12.81 Bulletin 81/49**

(84) Designated Contracting States:
**AT BE CH DE FR IT LI LU NL SE**

(71) Applicant: **Evans, Jacob Donald**
**Bryn Tawe 49 Grove Road**
**Pontardawe Swansea SA8 4HH(GB)**

(72) Inventor: **Evans, Jacob Donald**
**Bryn Tawe 49 Grove Road**
**Pontardawe Swansea SA8 4HH(GB)**

(74) Representative: **Newstead, Michael John et al,**
**Haseltine Lake & Co. 28 Southampton Buildings**
**Chancery Lane**
**London, WC2A 1AT(GB)**

(54) A device for detecting a fault in an n-phase system.

(57) A device (2) for detecting a fault in a phase of an *n*-phase system (where *n* is an integer greater than 1) is disclosed. The device comprises *n* circuit limbs each including at least one electrical component (C1, C2, C3) the limbs being in a star connection. The sides of the limbs remote from their star point are connected to respective ones of the *n*-phases (R, Y, B) in use of the device, and a sensing lead (1) is connected to the star point.

FIG. 3

EP 0 041 374 A1

Croydon Printing Company Ltd.

-1-

## A DEVICE FOR DETECTING A FAULT IN AN $\underline{N}$-PHASE SYSTEM

According to the present invention there is provided a combination of a core balance transformer for an $\underline{n}$-phase system and a device for detecting a fault in a phase of the system (where $\underline{n}$ is an integer greater than 1), the device comprising $\underline{n}$ circuit limbs each including at least one electrical component, the limbs being in a star connection and the sides of the limbs remote from their star point being connected to respective ones of the $\underline{n}$ phases on an output side of the transformer, and a sensing lead connected between the said star point and neutral in such a manner as to isolate the system in the event of a failure of at least one of the phases in use of the combination.

The present invention will now be described by way of example with reference to the accompanying drawings, in which:-

Figure 1 shows an example of a device for detecting a fault in a three-phase system;

Figure 2 shows positions of such a device in relation to an earth leakage circuit breaker; and

Figures 3, 4, 5 and 6 show examples of other devices, in conjunction with three-phase supply systems.

A triple pole, with or without a neutral, earth leakage circuit breaker detects and automatically isolates an earth fault in a circuit controlled by it, but does <u>not</u> detect a single phase fault. The examples to be described of devices in combinations according to the present invention enable the additional feature of detecting such a fault, so as to automatically isolate a circuit or part of a circuit in the event of one or two phases failing in a three-phase supply. The device could be an integral part of an earth leakage circuit breaker, or a completely separate device to work in conjunction with it. The device could be in a balanced or an unbalanced system and could be used, for example, with motors, overhead lines or feeder cables.

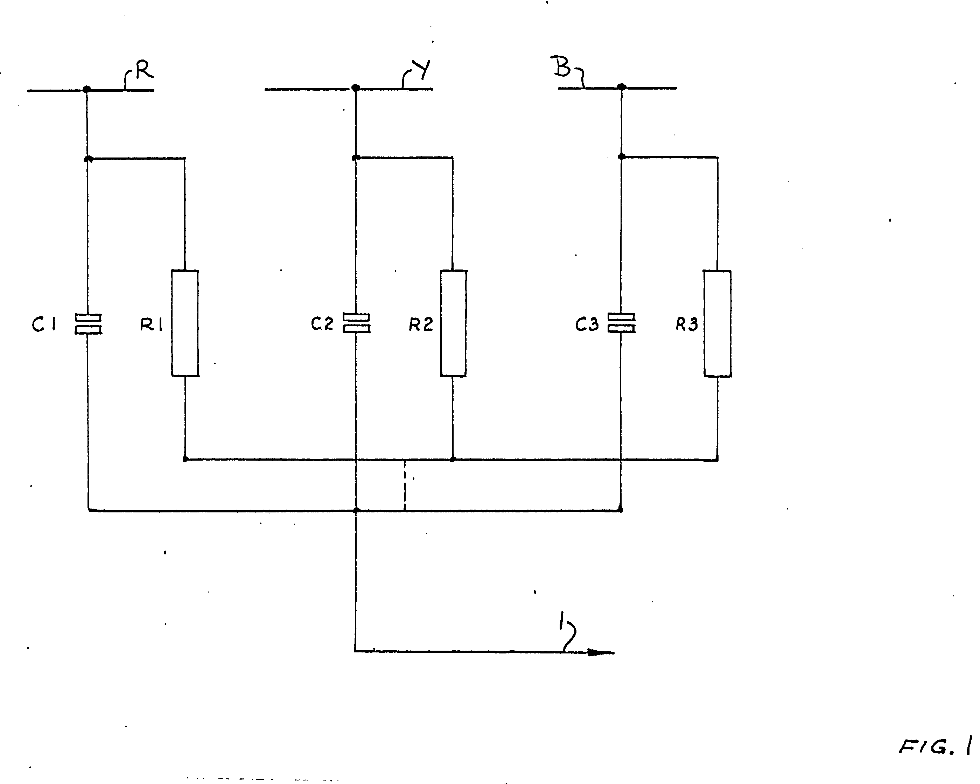

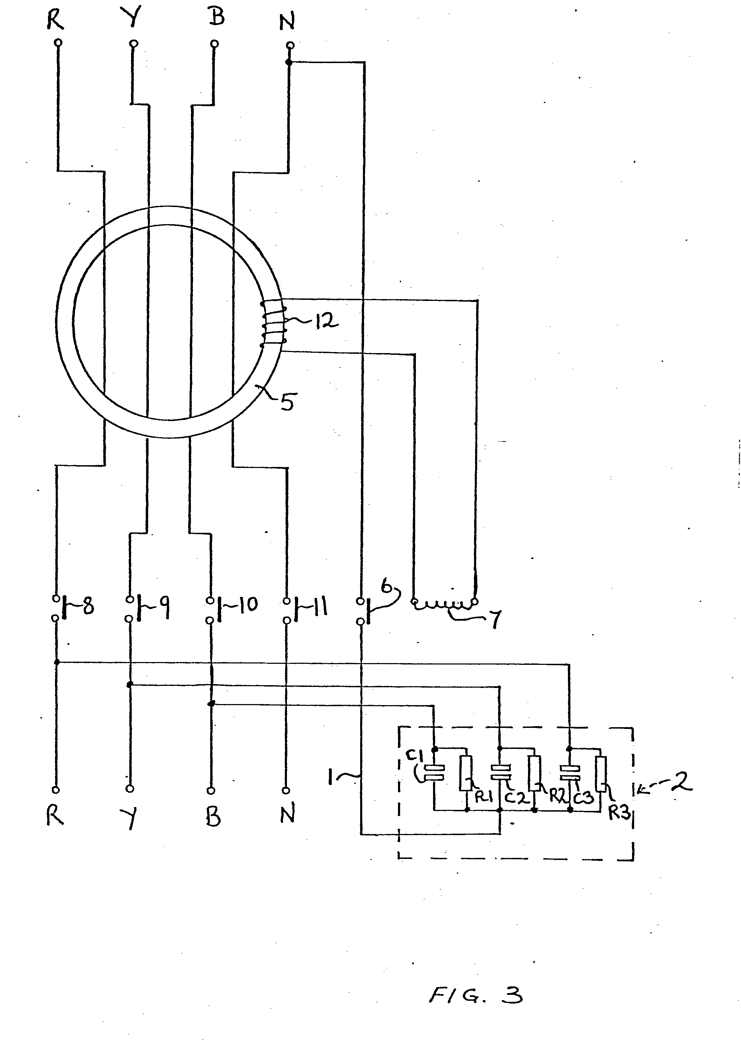

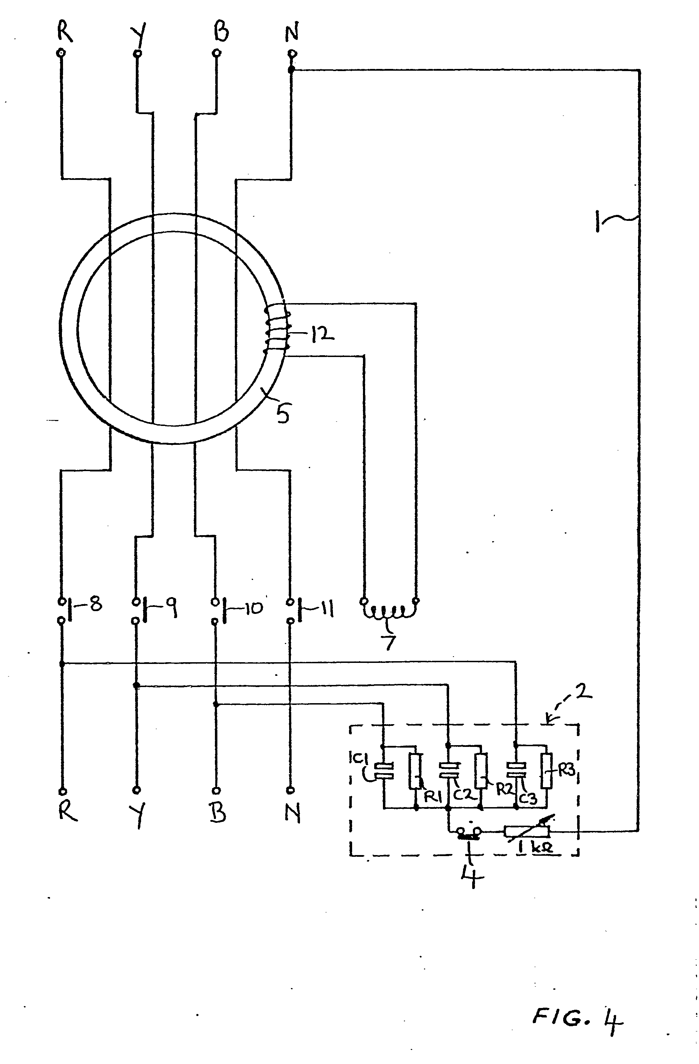

Referring to Figure 1, one example of a device comprises three star-connected capacitors C1, C2 and C3 and three star-connected resistors R1, R2 and R3 for discharging purposes. To the star point of the capacitors, there is connected a sensing lead 1 and the star point of the capacitors and the start point of the resistors could be connected together (see Figures 3 and 4). The sides of the capacitors and the sides of the resistors remote from their star points are connected respectively to the red, yellow and blue lines R, Y, and B of a three-phase supply, the device comprising an artificial load for the supply. Instead of being provided by the two star connections shown in Figure 1, in general, the device may comprise one or more star connections in the or each of which, each circuit limb includes any suitable electrical component such as a resistor, a conductor, a capacitor, a relay, a transformer winding etc. or a combination of any such components connected in a series and/or parallel arrangement. The components must be rated suitable for the supply voltage, and enable a current to be passed sufficient to trip an earth leakage circuit breaker under an earth fault. In the Figure 1 example, a typical value for each of the capacitors, necessary for tripping an earth leakage circuit breaker used with a 50Hz, three-phase, 415 volts supply rated at any current but requiring 100mA for tripping, would be $2\mu F$.

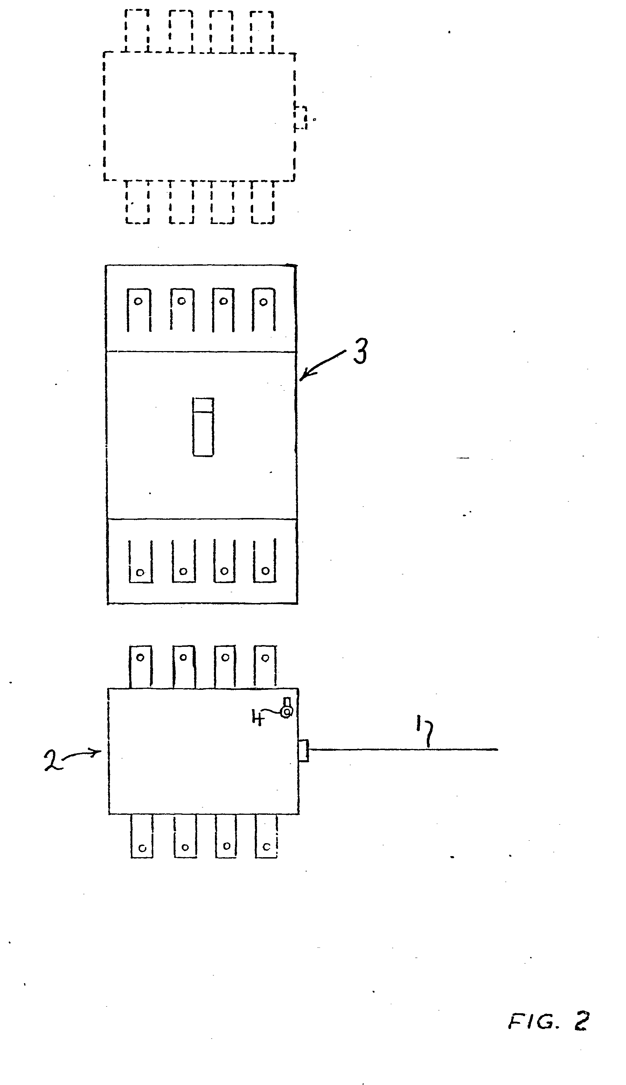

The device of Figure 1, or an alternative form of this device, operates on the principle that the vectorial sum of the currents in a three-phase balanced system is always zero. Under correct operating conditions, the star or neutral point of the device, comprising an artificial load for the supply, is at zero potential and no current will flow through the sensing lead 1 when the neutral or star point is connected to the neutral or star point of the supply transformer. Should one or two phases fail, the neutral or star point of the device is no longer at zero potential, and current will now flow to the star or neutral point of the supply transformer and this current can be utilised to trip an earth leakage circuit breaker if the sensing lead 1 is connected to neutral at a point before the neutral enters the core balance transformer of the current-operated earth leakage circuit breaker. As mentioned above, the device could be separate from the earth leakage circuit breaker or an integral part of it. Figure 2 shows the device (2) situated below the circuit breaker (3), the latter being a triple pole and neutral current-operated earth leakage circuit breaker, an alternative position of the device, above the circuit breaker, being shown by broken lines. To delay the tripping operation during the initial energising of the device, some means of "slugging" is required. This could be achieved by means of a normally closed switch 4 which must be open at the instant of switching on, or a relay having a normally open contact timed to close — and when a single relay is used for this, it may also be timed to open. As mentioned above, tripping takes place due to the out of balance currents in

-4-

the core balance transformer of the current-operated
earth leakage circuit breaker, the out of balance
being caused by the production of a potential at the
star or neutral point of the device. The resultant
current is fed back to the supply transformer neutral
or star point through the sensing lead 1, which must
be connected to the neutral line, by-passing the core
balance transformer, or alternatively be connected
directly to earth. The device, however, must always
be connected to outgoing terminals from the transformer
and the sensing lead to the incoming neutral line in
the former case.

Figure 3 shows an example of a device in
conjunction with the core balance transformer (5)
of a normal triple pole and neutral current-operated
earth leakage circuit breaker, the device being
fitted within the body of the circuit breaker. The
sensing lead 1 is connected to the neutral line N
on the input side of the core balance transformer
5 via a normally open contact 6. There are four
other normally open contacts 8, 9,10 and 11, in
the red, yellow, blue and neutral lines respectively.
The contacts 6, 8, 9, 10 and 11 are closed manually
for operation of the system, the contact 6 being
a contact for "slugging", closing after the four
contacts 8,9, 10 and 11. If one or two of the phases
fail, the vectorial sum of the currents in the device
2 will no longer be zero, so that a voltage is fed
back via the sensing lead 1 to the neutral line so
that the resultant current following therein is sensed
by a winding 12 to energise the coil 7 of a trip
relay and thereby open the contacts 8, 9, 10 and 11
to isolate the load from the supply and also the
contact 6.

Figure 4 shows a device corresponding to
that of Figure 3 in conjunction with the core balance transformer 5 of a triple pole and neutral current-operated earth leakage circuit breaker but not as an integral part thereof, items which are the same as items in Figure 3 being given the same reference numerals as in Figure 3. In this example, instead of the use of a delayed contact for "slugging", there is used a normally closed switch 4.

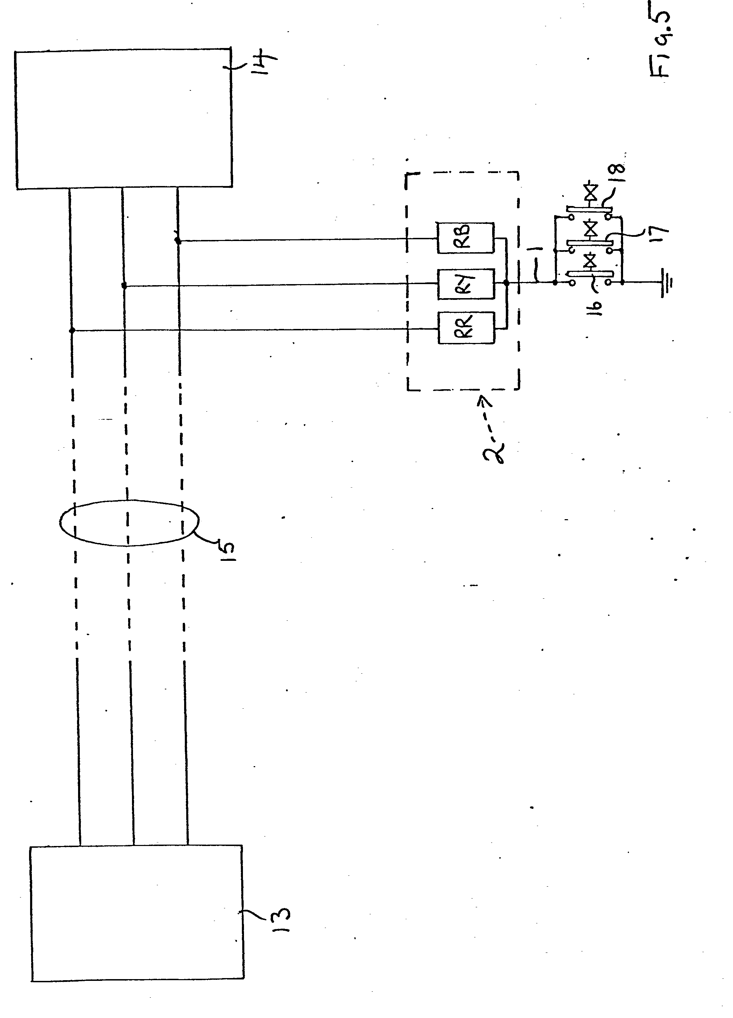

Figure 5 shows an example of a device 2 used to isolate overhead lines 15 or lines 15 in a buried cable between a sending end earth leakage circuit breaker 13 and a receiving end earth leakage circuit breaker 14 each including a core balance transformer. The device 2 comprises a star connnection of relays RR, RY and RB and the operating current of each relay must be greater than that required to trip the circuit breaker 13 on earth leakage. Each of the relay contacts must be a normally open contact and, for "slugging" timed to close after a delay after energisation of the respective relay coil but may be timed to open if required. Reference numerals 16, 17 and 18 denote the normally open timed contacts of the relays.

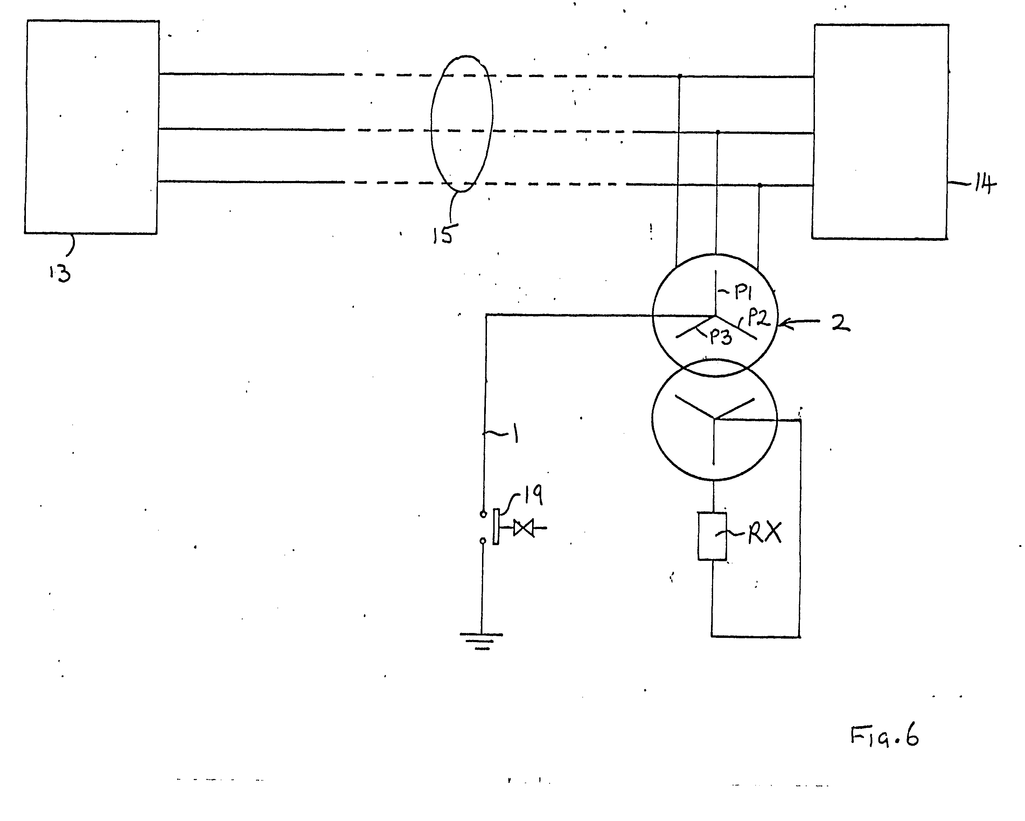

Figure 6 shows a modification of Figure 5, for isolating the overhead lines 15 or lines 15 in a buried cable in the event of a break or a high resistance conductor fault in a high voltage or extra high voltage system. In this case, the device 2 comprises star-connected primary windings P1, P2 and P3 of a transformer. Reference RX denotes a relay whose coil is energised from low voltage secondaries of the transformer, reference numeral 19 denoting a normally open contact of the relay RX in the sensing lead 1, which for "slugging", closes after a delay after energisation of the coil of relay RX.

Instead of being used to isolate a supply system, a combination according to this invention could be used to isolate a multi-phase motor, for example, in the event of a phase failure.

CLAIMS

1. A combination of a core balance transformer for an n-phase system and a device for detecting a fault in a phase of the system (where n is an integer greater than 1), the device comprising n circuit limbs each including at least one electrical component, the limbs being in a star connection and the sides of the limbs remote from their star point being connected to respective ones of the n phase on an output side of the transformer, and a sensing lead connected between the said star point and neutral in such a manner as to isolate the system in the event of a failure of at least one of the phases in use of the combination.

2. A combination according to claim 1, wherein each of the limbs includes a capacitor.

3. A combination according to claim 1 or 2, wherein each of the limbs includes a resistor.

4. A combination according to any preceding claim, wherein each of the limbs includes a relay.

5. A combination according to any preceding claim, wherein each of the limbs includes a winding.

6. A combination according to any preceding claim, wherein the transformer is in a current-operated earth leakage circuit breaker, the latter including a neutral line and there being sensing means to sense current in the neutral line in use of the combination due to current in the sensing lead, to isolate the phases.

7. A combination according to claim 6, wherein the said sensing means comprises a winding of the core balance transformer and a tripping relay whose coil is energised as a result of the winding of the core balance transformer sensing current in the neutral line, to open contacts which are connected respectively in the phases of the system
and the neutral line, the contacts being on the
output side of the circuit breaker and the connection
of the sensing lead to the neutral line being on
the input side of the circuit breaker.

      8.   A combination according to claim 7,
wherein the sensing lead is connected to the neutral
line via a further contact.

      9.   A combination according to claim 7,
wherein the sensing lead is directly connected to
the said neutral line.

0041374

FIG. 1

FIG. 2

0041374

FIG. 3

0041374

FIG. 4

Fig.5

Fig.6

0041374

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| A | <u>DE − A1 − 2 700 145</u> (F. LAUERER) <br> * pages 8 to 10; fig. * <br> −− | 1,3, 5−7, 9 |
| | <u>GB − A − 1 531 933</u> (WESTINGHOUSE ELECTRIC CORP.) <br> * page 2, lines 37 to 110; fig. * <br> −− | 1,3, 4 |
| | Patents Abstracts of Japan Vol. 3, No. 129, 26 October 1979, page 92E147 <br> & JP − A − 54 − 106838 <br> −− | 1,3 |
| | <u>DE − C − 1 100 152</u> (SIEMENS-SCHUCKERTWERKE AG) <br> * fig. 1 * <br> −−−− | 2 |

**CLASSIFICATION OF THE APPLICATION (Int. Cl.³)**

H 02 H 3/347

**TECHNICAL FIELDS SEARCHED (Int. Cl.³)**

H 02 H 3/16
H 02 H 3/32
H 02 H 3/33
H 02 H 3/34
H 02 H 3/347

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 03−09−1981 | LEMMERICH |

EPO Form 1503.1 06.78